# EUROPÄISCHE PATENTSCHRIFT

(11) **EP 2 050 529 B1**
(45) Veröffentlichungstag und Bekanntmachung des Hinweises auf die Patenterteilung: **17.07.2013**
(21) Anmeldenummer: 08017930.2
(22) Anmeldetag: 14.10.2008
(51) Int. Cl.: B23B 27/00, B23B 27/06, B23B 27/16

(54) **Schneidwerkzeug zum Aufbohren und Drehen und Schneideinsatz dafür**
Cutting tool for drilling-out and turning and cutting insert for same
Outil de coupe destiné au forage et au tournage et insert de coupe pour un tel outil

(30) Priorität: 16.10.2007 AT 63007 U
(43) Veröffentlichungstag der Anmeldung: 22.04.2009
(73) Patentinhaber: Ceratizit Austria Gesellschaft M.B.H., 6600 Reutte (AT)
(72) Erfinder: Maier, Hans, 6600 Pflach (AT); Kerle, Siegfried, 6671 Rieden 2 (AT); Reich, Eduard, 6654 Holzgau 21c (AT); Urschitz, Harald, 6600 Breitenwang (AT)

(56) Entgegenhaltungen:
- EP-A- 1 344 595
- EP-A- 1 749 602
- DE-U1- 8 713 249

## Beschreibung

Die Erfindung betrifft ein Schneidwerkzeug zum Aufbohren und Drehen, bestehend aus einem schaftförmigen Werkzeuggrundköper sowie zwei am Werkzeuggrundkörper in Umfangsrichtung versetzt zueinander angeordneten Schneideinsätzen mit jeweils drei Schneidecken, welche jeweils mindestens eine aktive Schneidecke aufweisen, die von zwei aneinander angrenzenden Schneidkantenabschnitten gebildet wird.

Derartige Werkzeuge werden vielfach zur Bearbeitung von Aluminiumfelgen für Autoräder eingesetzt. Bei der zerspanenden Bearbeitung dieser Felgen, sollen verschiedene unterschiedliche Bearbeitungsoperationen mit einem einzigen Werkzeug ausgeführt werden. Die derzeit bekannten Werkzeuge dieser Art bestehen aus einem schaftförmigen Werkzeuggrundkörper, an dem zwei in Umfangsrichtung 180° zueinander versetzt angeordnete rhombusförmige Schneideinsätze so angeordnet sind, dass jeder Schneideinsatz eine von zwei aneinandergrenzenden Schneidkantenabschnitten gebildete, aktive Schneidecke, mit einem Eckenwinkel von 35° oder 55° aufweist.

Aktive Schneidecke soll bedeuten, dass die Schneidecke freiliegend angeordnet ist, sodass sie für Schneidoperationen eingesetzt werden kann. Die Schneideinsätze sind dabei so zueinander angeordnet, dass die aktive Schneidecke eines Schneideinsatzes in Achsrichtung des Werkzeuges weiter vorne, mit einer nach vorne gerichteten seitlichen Schrägstellung der aktiven Schneidkante zu liegen kommt, während die aktive Schneidecke des anderen Schneideinsatzes in Achsrichtung weiter rückwärts, mit einer nach hinten gerichteten seitlichen Schrägstellung der aktiven Schneidkante zu liegen kommt.

Bei der Bearbeitung der Felge im Rohzustand, welche bereits eine vorgebohrte Nabenbohrung mit einem bestimmten Durchmesser aufweist, wird mit der weiter vorne liegenden aktiven Schneidecke und dazugehörigen, vorne liegenden Schneidkante zuerst die Anlagefläche der Felge abgedreht und dann die Nabenbohrung ausgedreht. Nach dem Ausdrehen der Nabenbohrung, wird mit derselben Schneidengeometrie die exakte Nabenkontur ausgedreht. Schlussendlich wird mit der zweiten aktiven Schneidecke und der dazugehörigen hinten liegenden Schneidkante der Sitz für eine Abdeckkappe, auf dem der Anlagefläche gegenüberliegenden Ende der Nabenbohrung, ausgedreht. Nachteilig bei derartigen Werkzeugen ist, dass das Aufbohren der Nabenbohrung in mehreren zeitaufwändigen Durchgängen erfolgen muss, um zu vermeiden, dass zu große Späne gebildet werden und zu hohe Schnittkräfte auftreten, welche das Werkstück oder auch das Werkzeug beschädigen könnten.

Die EP-A 1 344 595 beschreibt ebenfalls ein Schneidwerkzeug, bestehend aus einem schaftförmigen Werkzeuggrundkörper sowie mit zwei am Werkzeuggrundkörper in Umfangsrichtung versetzt zueinander angeordneten Schneidkanten gemäß dem Oberbegriff der vorliegenden Anmeldung. Durch die spezielle Form der Schneideinsätze und Anordnung der Schneidkanten und Schneidecken ist jedoch die eingangs geschilderte Drehbearbeitung von Aluminiumfelgen nicht möglich.

Aufgabe der vorliegenden Erfindung ist es daher, ein Schneidwerkzeug zum Aufbohren und Drehen zu schaffen, mit dem eine Bohrung, mit einer deutlich größeren Zerspanungsleistung aufgebohrt werden kann, ohne dass das Werkstück und/oder das Werkzeug beschädigt werden und ohne die Funktionalität des Werkzeuges zum Aufbohren und anschließenden Drehen zu beeinträchtigen.

Erfindungsgemäß wird dies dadurch erreicht, dass die Schneideinsätze eine identische Form aufweisen und derart angeordnet sind, dass beim ersten Schneideinsatz zwei Schneidecken, mit in Bohrrichtung unterschiedlicher axialer und radialer Positionierung im aktiven Schneideinsatz stehen, wobei die Schneidkantenabschnitte, welche die in Bohrrichtung weiter rückwärts liegende aktive Schneidecke bilden einerseits mit dem einen Schneidkantenabschnitt einen Winkel α₁ im Bereich von 90° bis 96° und andrerseits mit dem anderen Schneidkantenabschnitt einen Winkle α₂ im Bereich von 40° bis 55°, mit einer Parallelen P zur Werkzeugachse A einschließen, dass beim zweiten Schneideinsatz eine Schneidecke im aktiven Schneideinsatz steht, wobei der an diese Schneidecke angrenzende, in Bohrrichtung weiter vorne liegende Schneidkantenabschnitt, einen Winkel α₃ im Bereich von 90° bis 96°, mit einer Parallelen P' zur Werkzeugachse A einschließt und dass die aktive Schneidecke des zweiten Schneideinsatzes in axialer Richtung, zwischen den beiden aktiven Schneidecken des ersten Schneideinsatzes liegt.

Durch die erfindungsgemäße Ausgestaltung und Anordnung der Schneideinsätze wird beim Aufbohren der Nabenbohrung, eine Aufteilung des Spanquerschnittes in drei unterschiedliche Späne erreicht, wodurch die Bohrleistung beim Aufbohren deutlich vergrößert wird, sodass der Aufbohrvorgang in Abhängigkeit von der gewünschten Bohrungsgröße, unter Umständen schon in einem einzigen Arbeitsgang erfolgen kann und eine deutliche Einsparung bei der Bearbeitungszeit erzielt wird.

Dadurch dass die Schneideinsätze eine identische Form aufweisen und damit auch gegenseitig austauschbar sind, wird gleichzeitig erreicht, dass unverbrauchte Schneidkanten und Schneidecken der Schneideinsätze, durch einen Wechsel gezielt zum Einsatz gebracht werden können.

In einer besonders vorteilhaften Ausgestaltung des Schneidwerkzeuges, weisen die Schneideinsätze die Grundform eines gleichseitigen Dreiecks, mit jeweils geraden Schneidkanten auf zwei Seiten und mit einer aus zwei geraden konkav abgewinkelten Abschnitten gebildeten Schneidkante auf der dritten Seite auf.

Vorteilhafterweise sind dabei die Schneideinsätze im Schneidwerkzeug derart angeordnet, dass die aktiven Schneidecken des ersten Schneideinsatzes, durch eine gerade Schneidkante miteinander verbunden sind wobei die Seite mit der abgewinkelten Schneidkante in Bohrrichtung rückwärts liegt und dass beim zweiten Schneideinsatz die Seite mit der abgewinkelten Schneidkante in Bohrrichtung vorne liegt.

Durch eine derartige Ausgestaltung und Anordnung der Schneideinsätze wird erreicht, dass bei einem Wechsel der Schneideinsätze in den jeweils anderen Plattensitz, nur eine einzige definierte Lagepositionierung der Wendeschneidplatten möglich ist. Unter dieser Vorraussetzung wird es dann auch ermöglicht, das Schneidwerkzeug in der Hinsicht besonders vorteilhaft auszugestalten, dass jede aktive Schneidecke des ersten Schneideinsatzes und die aktive Schneidecke des zweiten Schneideinsatzes, jeweils aus einem kreisbogenförmigen Schneidenabschnitt besteht, wobei jeder Schneidenabschnitt vergleichsweise zueinander einen unterschiedlichen Radius aufweist. Auf diese Weise, können die bei der Bearbeitung benötigten unterschiedlichen Eckenradien, die sonst nur mit einem zweiten Bearbeitungswerkzeug realisiert werden könnten, mit einem einzigen Bearbeitungswerkzeug realisiert werden, ohne dass es zu einer falschen Position der jeweils notwendigen kreisbogenförmigen Schneidecke am Schneidwerkzeug kommen kann.

In einer anderen vorteilhaften Ausgestaltung besteht jede aktive Schneidecke aus drei kreisbogenförmigen Schneidenabschnitten, wobei jeweils die Radien der beiden seitlichen Schneidenabschnitte derselben aktiven Schneidecke gleich groß sind und gegenüber den seitlichen Schneidenabschnitten der jeweils anderen aktiven Schneidecken unterschiedlich groß sind und wobei die jeweils in der Mitte liegenden Schneidenabschnitte einen mindestens um den Faktor 5 größeren Radius aufweisen als die seitlichen Schneidenabschnitte. Mit derartig ausgestalteten Schneideinsätzen wird eine deutlich verbesserte glatte Oberflächenqualität des bearbeiteten Werkstückes erreicht.

Im Folgenden wird die Erfindung anhand von Figuren näher erläutert.

### Es zeigen:

- Fig. 1 a-d: den Arbeitsablauf bei der Bearbeitung der Nabenbohrung einer Aluminiumfelge mit einem Schneidwerkzeug nach dem Stand der Technik
- Fig. 2: ein erfindungsgemäßes Schneidwerkzeug in Schrägansicht
- Fig. 3: das erfindungsgemäße Schneidwerkzeug nach Fig. 2 in Draufsicht
- Fig.4: das erfindungsgemäße Schneidwerkzeug nach Fig. 2 in Stirnansicht
- Fig. 5: eine Prinzipskizze, welche die Anordnung der Schneideinsätze am Werkzeug verdeutlicht.
- Fig. 6a-d: den Arbeitsablauf bei der Bearbeitung der Nabenbohrung einer Aluminiumfelge mit einem erfindungsgemäßen Schneidwerkzeug
- Fig. 7: die Variante eines Schneideinsatzes für ein erfindungsgemäßes Schneidwerkzeug in Seitenansicht
- Fig. 8: den Schneideinsatz nach Fig. 7 in Draufsicht

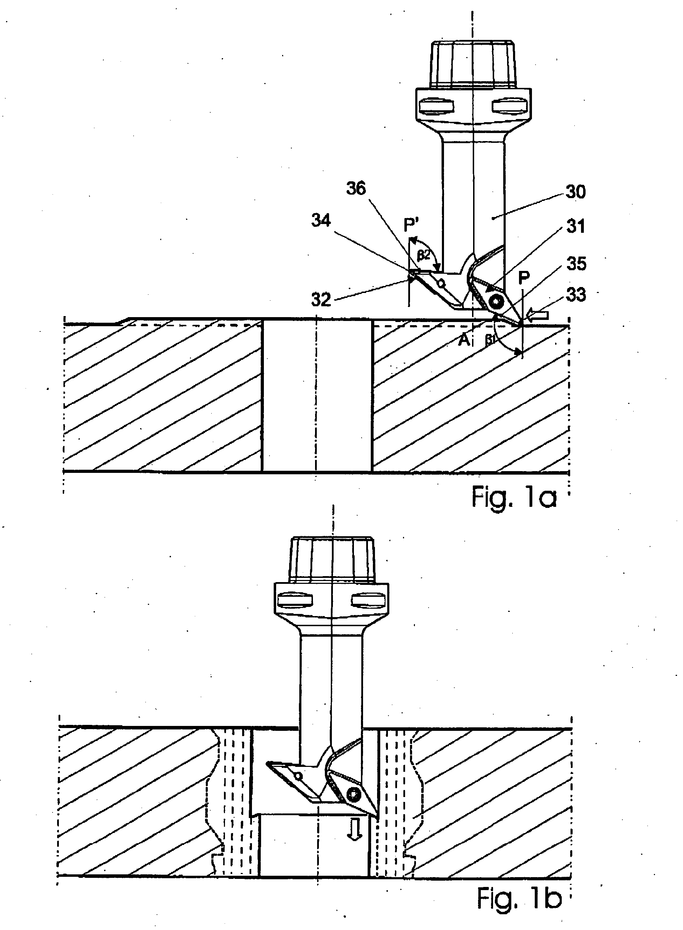

In den Figuren 1a bis 1d ist der Arbeitsablauf bei der Bearbeitung einer Nabenbohrung einer Aluminiumfelge für Autoräder mit einem Schneidwerkzeug zum Aufbohren und Drehen nach dem Stand der Technik dargestellt. Das Werkzeug besteht aus einem schaftförmigen Grundkörper -30- in dem in entsprechenden Aufnahmen zwei rhombusförmige, auswechselbare Schneideinsätze -31-, -32- mit Mittelloch durch Klemmschrauben befestigt sind. Die Schneideinsätze -31-, -32- sind in radialer Richtung 180° zueinander versetzt angeordnet und weisen jeweils eine von zwei aneinander grenzenden Schneidkantenabschnitten gebildete aktive Schneidecke -33-, -34- auf, welche in axialer und radialer Richtung gegeneinander versetzt sind. Die in Axialrichtung weiter vorne liegende Schneidkante -35- des Schneideinsatzes -31- schließt mit einer Parallelen P zur Werkzeugachse A einen Winkel β1 von etwa 100° bis 125° ein, während die in Axialrichtung weiter hinten liegende Schneidkante -36- des zweiten Schneideinsatzes -32- mit einer Parallelen P' zur Werkzeugachse A einen Winkel β2 von etwa 90° bis 95° einschließt.

In einem ersten Arbeitsgang wird die rückseitige Oberfläche der Felge mit der Schneidecke -33- und der dazugehörigen, vorne liegenden Schneidkante -35-des Schneideinsatzes -31- in Planrichtung abgedreht, was in der Fig. 1a dargestellt ist.

Im folgenden Arbeitsgang wird die im Ausgangszustand bereits vorgebohrte Bohrung der Felge mit der aktiven Schneidecke -33- und der Schneidkante -35-des Schneideinsatzes -31- in mehreren Arbeitsgängen auf jenen Durchmesser ausgedreht, von dem ausgehend dann die Endkontur der Nabenbohrung bearbeitet werden kann. Der Schneideinsatz -32- kommt während dieser Zerspanungsoperation nicht zum Einsatz. Dieser Arbeitsablauf ist in Fig. 1b dargestellt.

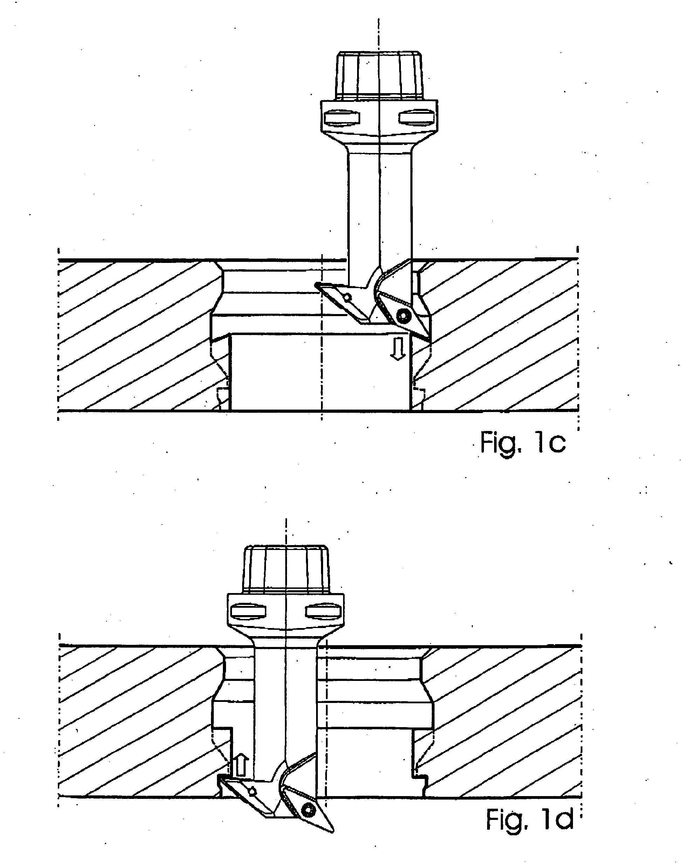

Anschließend wird die gewünschte Endkontur der Nabenbohrung mit der Schneidkante -35- und der Schneidecke -33- des Schneideinsatzes -31- durch Ausdrehen von oben nach unten hergestellt, was in Figur 1c dargestellt ist. Je nach Aufmass muss auch dieser Vorgang in mehreren Schritten ausgeführt werden, um einen Überbelastung des Schneideinsatzes zu vermeiden.

Abschließend wird an der, der Anlagefläche der Felge gegenüberliegenden Stirnseite der Nabenbohrung, das Profil für die Aufnahme einer Abdeckkappe hinterdreht. Dabei wird die Bohrung von unten nach oben nunmehr mit der Schneidecke -34- und der dazugehörigen rückwärts liegenden Schneidkante -36- des Schneideinsatzes -32- bearbeitet, was in Fig. 1d dargestellt ist.

Nachteilig bei diesem Werkzeug und bei dieser Art der Bearbeitung ist, dass die Bohrung in mehreren Durchgängen ausgedreht werden muss, um eine Bildung von zu großen Spänen, die zu einer Beschädigung des Werkstückes und/oder des Werkzeuges führen könnten, zu vermeiden.

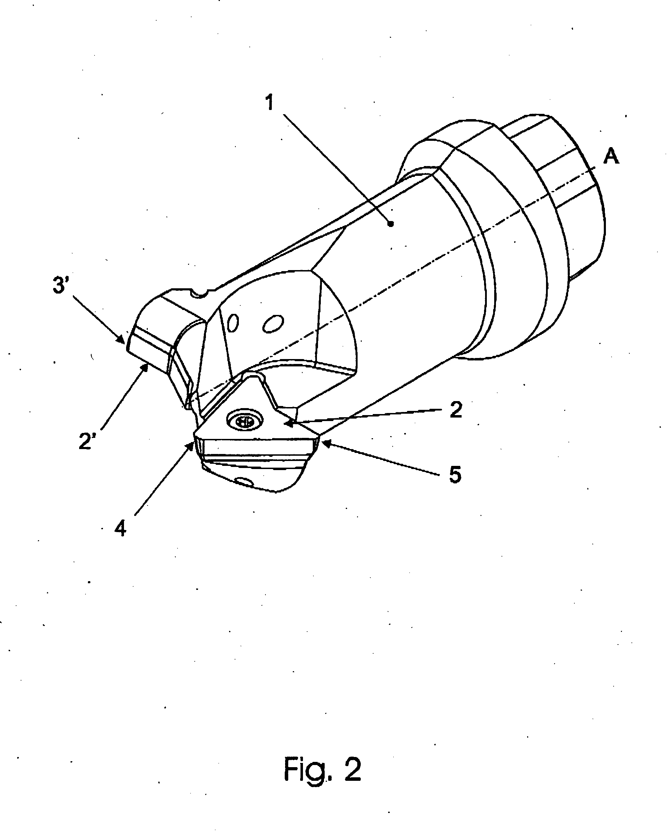

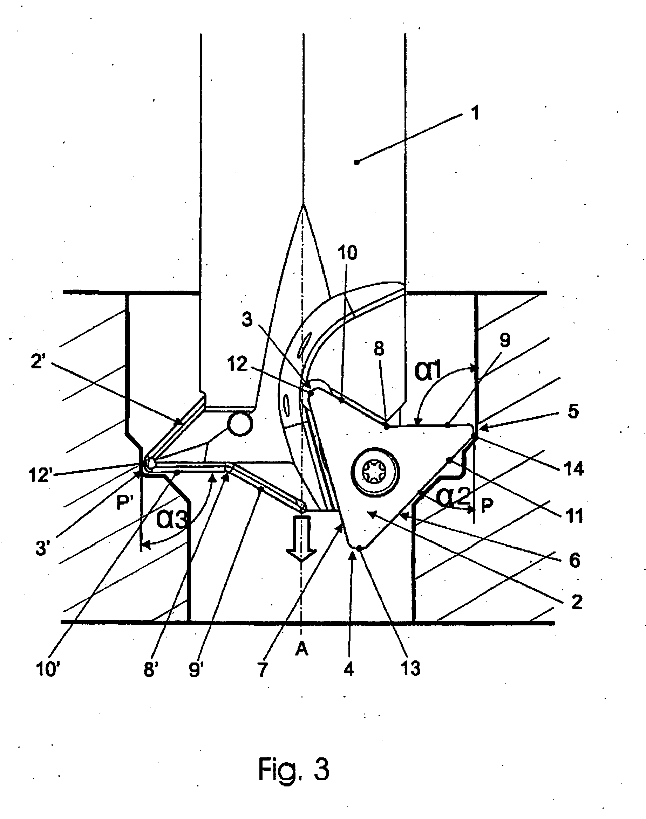

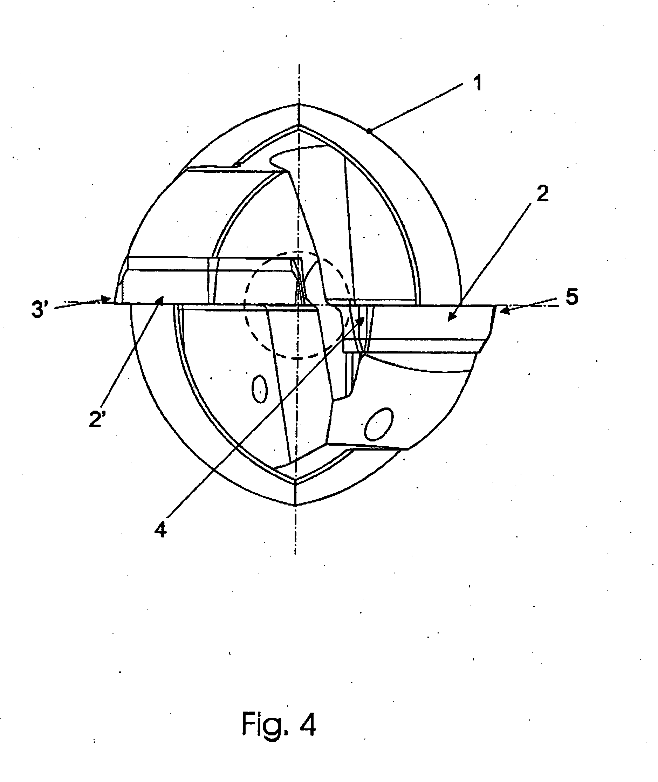

In den Figuren 2, 3 und 4 ist ein erfindungsgemäßes Schneidwerkzeug dargestellt, mit welchem ein deutlich verbessertes und schnelleres Bearbeiten einer entsprechenden Nabenbohrung ermöglicht wird.

Das Schneidwerkzeug besteht aus einem schaftförmigen Werkzeuggrundkörper -1- und zwei identisch ausgeführten Schneideinsätzen -2-, -2'- von etwa der Form eines gleichseitigen Dreiecks mit jeweils geraden Schneidkanten -6-, -7- bzw. -6'-, -7'- auf zwei Seiten und mit einer aus zwei geraden konkav abgewinkelten Abschnitten -9-, -10- bzw. -9'-, -10'- gebildeten Schneidkante -8-, -8'- auf der dritten Seite. Die Schneideinsätze -2- und -2'- sind in radialer Richtung 180° zueinander versetzt angeordnet. Beim ersten Schneideinsatz -2- stehen zwei Schneidecken -4-und -5- im aktiven Schneideinsatz, welche in axialer und radialer Richtung unterschiedlich positioniert sind. Diese aktiven Schneidecken -4- und -5- sind durch eine gerade Schneidkante -6- miteinander verbunden. Die aus zwei konkav abgewinkelten Abschnitten -10- und -9- gebildete Schneidkante -8- liegt in Bohrrichtung rückwärts.

Die Schneidkantenabschnitte -9-, -11-, welche die in Bohrrichtung weiter rückwärts liegende, aktive Schneidecke -5- bilden, schließen einerseits einen Winkel α1 von 91° und andererseits einen Winkel α2 von 44° mit einer Parallelen P zur Werkzeugachse A ein. Der zweite Schneideinsatz -2'- ist derart angeordnet, dass die aus den zwei konkav abgewinkelten Abschnitten -9'-und -10'- gebildete Schneidkante -8'- in Bohrrichtung vorne liegt und dass er mit einer Schneidecke -3'- im aktiven Schneideinsatz steht. Der diese Schneidecke -3'- bildende, in Bohrrichtung vorne liegende Schneidkantenabschnitt -10'- schließt mit einer Parallelen P' zur Werkzeugachse A einen Winkel α3 von 91° ein. Der Schneideinsatz -2'- ist darüber hinaus so angeordnet, dass seine aktive Schneidecke -3'- in axialer Richtung zwischen den aktiven Schneidecken -4- und -5- des ersten Schneideinsatzes -2- liegt. Die Schneidecken -3-, -4- und -5- bzw. -3'-, -4'-und -5'- bestehen jeweils aus drei kreisbogenförmigen Schneidenabschnitten -12,15,16-;- -13,17,18-; -14,19,20- bzw. -12'15'16'-; -13'17'18'-; -14'19'20'-, wobei jeweils die beiden seitlichen Schneidenabschnitte -15,16- der Schneidecke -3- bzw. -15',16'- der Schneidecke -3'- gleich groß sind und einen Radius von 1,2 mm aufweisen, während die beiden seitlichen Schneidenabschnitte -17-18- bzw. -17'-18'- der Schneidecke -4- bzw. -4'- ebenfalls gleich groß sind und einen Radius von 1,6 mm aufweisen. Die beiden seitlichen Schneidenabschnitte -19,20- bzw. -19',20'- der Schneidecke -5- bzw. -5'- sind ebenfalls gleich groß und weisen einen Radius von 0,8 mm auf. Die jeweils in der Mitte zwischen den seitlichen Schneidenabschnitten liegenden Schneidenabschnitte -12,13,14- bzw. -12',13',14'- weisen Radien von 10 mm, 12 mm und 8 mm auf. Durch eine derartige Schneideckenausgestaltung können mit dem erfindungsgemäßen Schneidwerkzeug Konturflächen mit unterschiedlichen Radien an der Nabenbohrung hergestellt werden. Gleichzeitig wird durch die großen Radien der mittleren Schneidenabschnitte eine Glättung der bearbeiteten Oberflächen erreicht.

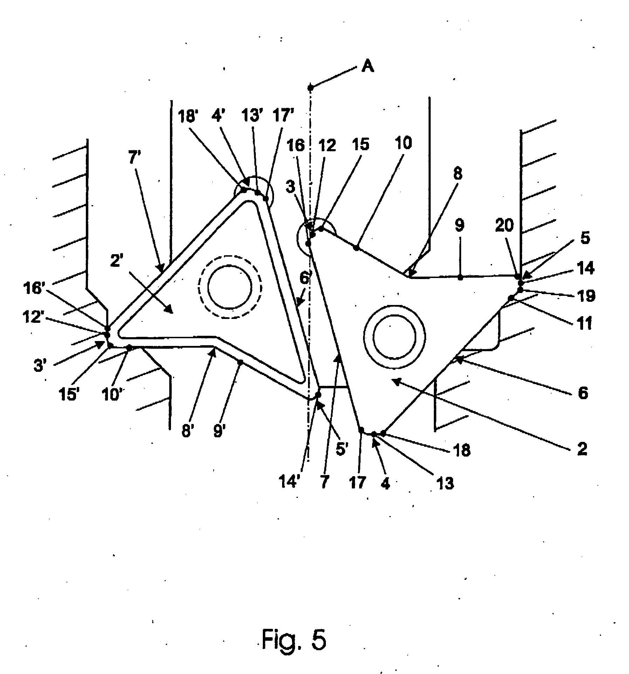

Figur 5 zeigt in einer Prinzipskizze die Anordnung der zwei Schneideinsätze am Werkzeug, um die mögliche gegenseitige Austauschbarkeit der Schneideinsätze -2-, -2'- zu demonstrieren. Der Zerspanungsvorgang wird mit einem Werkzeug, das mit den Schneideinsätzen -2- und -2'- bestückt ist, begonnen. Der Schneideinsatz -2- ist in der gezeigten Ansicht am Werkzeug mit der Spanfläche nach oben liegend positioniert, während der Schneideinsatz -2'- mit der Spanfläche nach unter liegend positioniert ist. Nach dem Verschleiß der Schneidkanten werden die Schneideinsätze -2- und -2'- aus ihren ursprünglichen Plattensitzen entfernt und nach Umklappen um 180° im ursprünglichen Plattensitz des jeweils anderen Schneideinsatzes positioniert. Auf diese Weise wird erreicht, dass jeder Schneideinsatz -2- und -2'- zumindest zweifach mit völlig unversehrten Schneidkanten zum Einsatz kommt. Durch die spezielle identische Ausgestaltung der Schneideinsätze -2- und -2'- wird die richtige Positionierung der Schneideinsätze bei einem Wechsel automatisch sichergestellt.

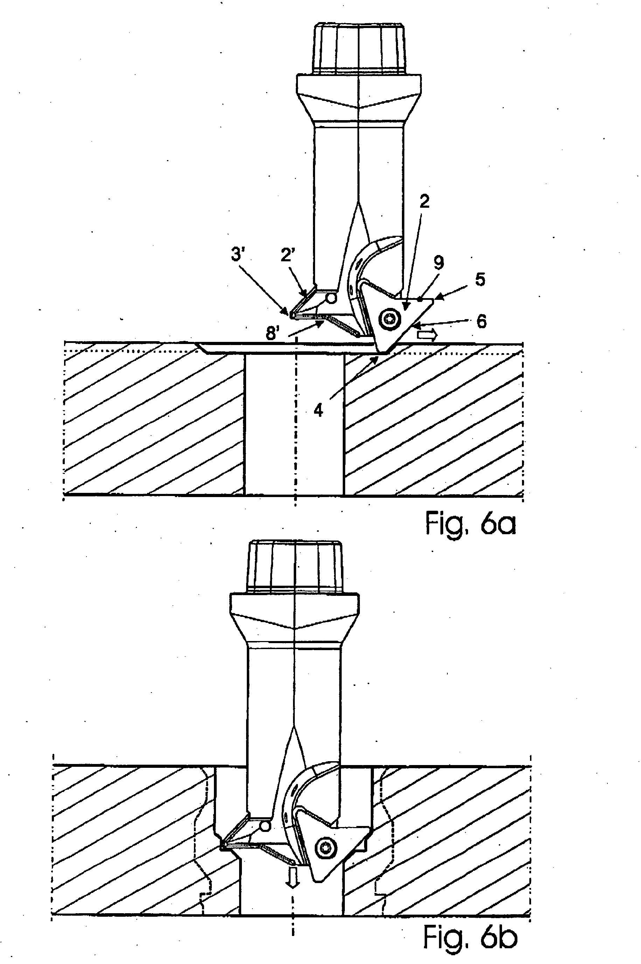

Die Figuren 6a bis 6d zeigen den Arbeitsablauf bei der Bearbeitung einer Nabenbohrung einer Aluminiumfelge mit einem erfindungsgemäßen Schneidwerkzeug zum Aufbohren und Drehen.

In einem ersten Arbeitsgang wird die rückseitige Oberfläche der Felge mit der in Bohrrichtung vorne liegenden Schneidecke -4- und der zugehörigen, außen liegenden Schneidkante -6- des Schneideinsatzes -2- in Planrichtung abgedreht, was in der Fig. 6a dargestellt ist.

In einem zweiten Arbeitsgang, der in Fig. 6b dargestellt ist, wird die vorgebohrte Bohrung der Felge mit der in Bohrrichtung rückwärts liegenden Schneidecke -5-und der zugehörigen Schneidkante -6- des Schneideinsatzes -2- sowie mit der Schneidecke -3'- und dem zugehörigen Schneidkantenabschnitt -10'- der in Bohrrichtung vorne liegenden Schneidkante -8'- des Schneideinsatzes -2'-gleichzeitig aufgebohrt. Die Schneideinsätze -2- und -2'- sind dabei so am Werkzeug angeordnet, dass der gewünschte Durchmesser der Nabenbohrung zur Herstellung der Endkontur in einem einzigen Durchgang aufgebohrt werden kann, wodurch gegenüber den bekannten Werkzeugen nach dem Stand der Technik eine deutliche Zeitersparnis bei der Bearbeitung erreicht wird. Dadurch, dass die Schneideinsätze -2- und -2'- so angeordnet sind, dass die aktive Schneidecke -3'- des Schneideinsatzes -2'- in axialer Richtung zwischen den aktiven Schneidecken -4- und -5- des Schneideinsatzes -2- liegt, kommt es zu einer Teilung des Spanes, wodurch eine Beschädigung des Werkstückes und/oder des Werkzeuges auch bei einem derartig großen Spanabtrag weitgehend verhindert wird.

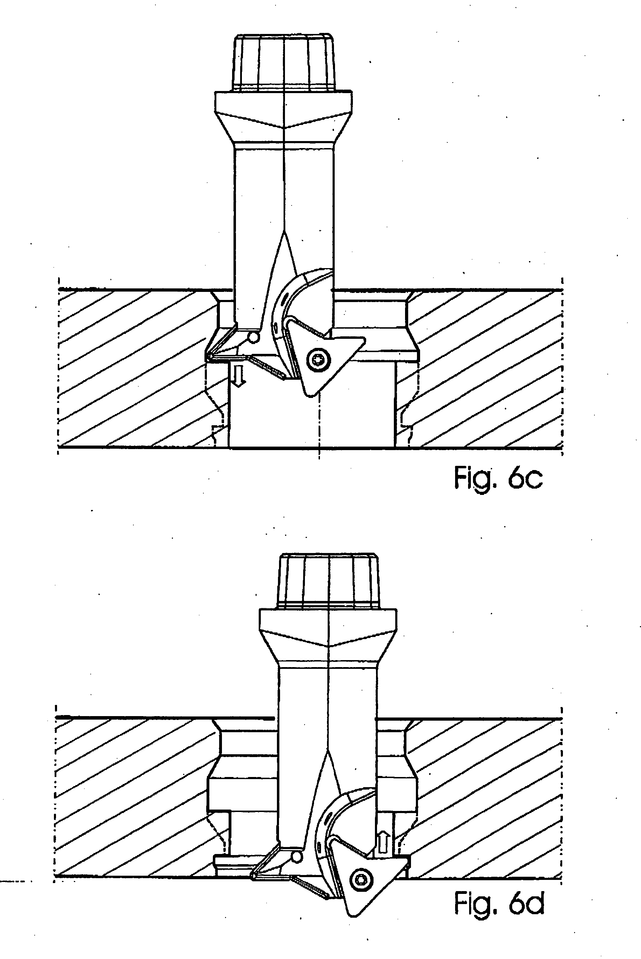

In einem dritten Arbeitsgang wird dann mit der Schneidecke -3'- und dem zugehörigen Schneidkantenabschnitt -10'- der in Bohrrichtung vorne liegenden Schneidkante -8'- des Schneideinsatzes -2'- die gewünschte Endkontur der Nabenbohrung ausgedreht, was in der Fig. 6c dargestellt ist.
In einem abschließenden Arbeitsgang schließlich, der in Fig. 6d dargestellt ist, wird an der, der Auflagefläche der Felge gegenüberliegenden Stirnseite der Nabenbohrung, das Profil für die Aufnahme der Abdeckkappe hinterdreht. Dabei wird die Nabenbohrung von unten nach oben nunmehr mit der Schneidecke -5- und dem zugehörigen Schneidkantenabschnitt -9- der in Bohrrichtung rückwärts liegenden Schneidkante -8- des Schneideinsatzes -2-bearbeitet.

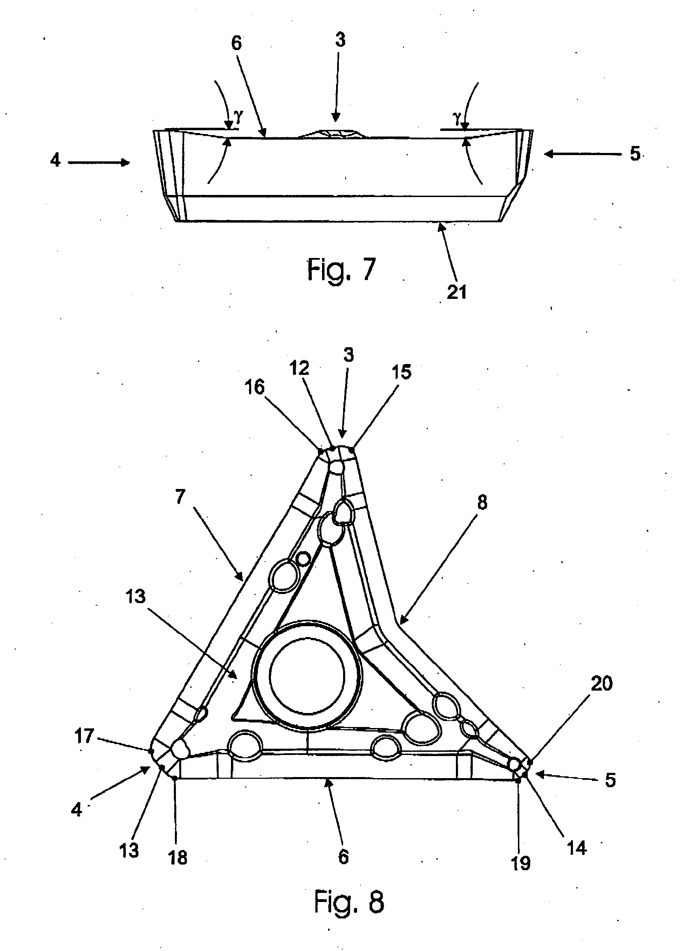

In Fig. 7 und Fig. 8 ist die Variante eines Schneideinsatzes für ein erfindungsgemäßes Schneidwerkzeug dargestellt. Der Schneideinsatz ist im Wesentlichen gleich ausgeführt wie die bisher beschriebenen Schneideinsätze, nur mit dem Unterschied, dass die, die Schneidecken -3-, -4-, -5- verbindenden Schneidkanten -6-, -7-, -8- in der Seitenansicht gemäß Fig. 8 gesehen, in der Ebene der Freifläche anschließend an die Schneidecken -3-, -4-, -5- nicht parallel zur Auflagefläche -21- verlaufen, sondern von den Schneidecken -3-, -4-, -5- weg in Richtung zur Mitte der Schneidkante -6-, -7-, -8- hin mit einem Winkel γ von 15° zur Auflagefläche -21-hin abfallend verlaufen. Auf diese Weise wird die Schneidfreudigkeit des Schneideinsatzes erhöht und der Späneablauf verbessert, was insbesondere bei der Zerspanung von Aluminium deutliche Vorteile bringt.

Die Figuren zeigen eine besonders vorteilhafte Ausgestaltung der Erfindung, diese ist jedoch keinesfalls darauf beschränkt. So können beispielsweise die Schneideinsätze ebenso in dreieckiger Grundform mit aus konkav abgewinkelten Schneidkantenabschnitten gebildeten Schneidkaten auf allen drei Seiten oder auch mit einer gleichschenkeligen Dreiecksform mit geraden Schneidkanten ausgeführt sein.

## Patentansprüche

1. Schneidwerkzeug zum Aufbohren und Drehen, bestehend aus einem schaftförmigen Werkzeuggrundkörper (1) mit einer Werkzeugachse A, sowie zwei am Werkzeuggrundkörper (1) in radialer Richtung versetzt zueinander angeordneten Schneideinsätzen (2,2') mit jeweils drei Schneidecken, welche jeweils mindestens eine aktive Schneidecke aufweisen, die von zwei aneinander angrenzenden Schneidkantenabschnitten gebildet wird, **dadurch gekennzeichnet,**
**dass** die Schneideinsätze (2,2') eine identische Form aufweisen und derart angeordnet sind, dass beim ersten Schneideinsatz (2) zwei Schneidecken(4,5), mit unterschiedlicher axialer und radialer Positionierung im aktiven Schneideinsatz stehen, wobei die
Schneidkantenabschnitte (9,11), welche die in Bohrrichtung weiter rückwärts liegende aktive Schneidecke (5) bilden einerseits mit dem Schneidkantenabschnitt (9) einen Winkel α₁ im Bereich von 90° - 96° und andererseits mit dem Schneidkantenabschnitt (11) einen Winkel α₂ im Bereich von 40° - 55° mit einer Parallelen P zur Werkzeugachse A einschließen, dass beim zweiten Schneideinsatz (2') eine Schneidecke (3') im aktiven Schneideinsatz steht, wobei der an diese Schneidecke (3') angrenzende, in Bohrrichtung weiter vorne liegende Schneidkantenabschnitt (10') einen Winkel α₃ im Bereich von 90° - 96° mit einer Parallelen P' zur Werkzeugachse A einschließt und dass die aktive Schneidecke (3') des zweiten Schneideinsatzes (2') in axialer Richtung zwischen den beiden aktiven Schneidecken (4,5) des ersten Schneideinsatzes (2) liegt.

2. Schneidwerkzeug nach Anspruch 1, **dadurch gekennzeichnet, dass** die Schneideinsätze (2,2') die Grundform eines gleichseitigen Dreieckes, mit jeweils geraden Schneidkanten (6,7,6',7') auf zwei Seiten und mit einer aus zwei geraden konkav abgewinkelten Abschnitten (9,10,9',10') gebildeten Schneidkante (8,8') auf der dritten Seite, aufweisen.

3. Schneidwerkzeug nach Anspruch 2, **dadurch gekennzeichnet, dass** die Schneideinsätze (2,2') derart angeordnet sind, dass die aktiven Schneidecken (4,5) des ersten Schneideinsatzes (2) durch eine gerade Schneidkante (6) miteinander verbunden sind wobei die Seite mit der abgewinkelten Schneidkante (8) in Bohrrichtung rückwärts liegt und dass beim zweiten Schneideinsatz (2') die Seite mit der abgewinkelten Schneidkante (8') in Bohrrichtung vorne liegt.

4. Schneidwerkzeug nach Anspruch 3, **dadurch gekennzeichnet, dass** jede aktive Schneidecke (4,5) des ersten Schneideinsatzes (2) und die aktive Schneidecke (3') des zweiten Schneideinsatzes (2') jeweils aus einem kreisbogenförmigen Schneidenabschnitt (13,14,12') besteht, wobei jeder Schneidenabschnitt (13,14,12') vergleichsweise zueinander einen unterschiedlichen Radius aufweist.

5. Schneidwerkzeug nach Anspruch 3, **dadurch gekennzeichnet, dass** jede aktive Schneidecke (3',4,5) aus drei kreisbogenförmigen Schneidenabschnitten (12',15',16'; 13,17,18; 14,19,20) besteht, wobei jeweils die Radien der beiden seitlichen
Schneidenabschnitte (15',16'; 17,18; 19,20) derselben aktiven Schneidecke gleich groß sind und gegenüber den seitlichen Schneidenabschnitten der jeweils anderen aktiven Schneidecken unterschiedlich groß sind und wobei die jeweils in der Mitte liegenden Schneidenabschnitte (12',13,14) einen mindestens um den Faktor 5 größeren Radius aufweisen als die benachbarten seitlichen Schneidenabschnitte (15',16'; 17,18; 19,20).

## Claims

1. Cutting tool for drilling out and turning, consisting of a shaft-like main tool body (1) having a tool axis A and also two cutting inserts (2, 2') which are arranged on the main tool body (1) in a manner offset with respect to one another in the radial direction and have in each case three cutting corners which have in each case at least one active cutting corner formed by two mutually adjoining cutting-edge portions,
**characterized**
**in that** the cutting inserts (2, 2') have an identical shape and are arranged such that, in the case of the first cutting insert (2), two cutting corners (4, 5) having different axial and radial positions are in active cutting operation, wherein the cutting-edge portions (9, 11), which form the active cutting corner (5) located further towards the rear in the drilling direction, firstly enclose with the cutting-edge portion (9) an angle α₁ in the range of 90°-96° and secondly enclose with the cutting-edge portion (11) an angle α₂ in the range of 40°-55° with a parallel P to the tool axis A, that, in the case of the second cutting insert (2'), one cutting corner (3') is in active cutting operation, wherein the cutting-edge portion (10') adjoining this cutting corner (3') and located further forwards in the drilling direction encloses an angle α₃ in the range of 90°-96° with a parallel P' to the tool axis A, and that the active cutting corner (3') of the second cutting insert (2') is located in the axial direction between the two active cutting corners (4, 5) of the first cutting insert (2).

2. Cutting tool according to Claim 1, **characterized in that** the cutting inserts (2, 2') have the basic shape of an equilateral triangle, having in each case straight cutting edges (6, 7, 6', 7') on two sides and having a cutting corner (8, 8'), formed from two straight, concavely angled portions (9, 10, 9', 10'), on the third side.

3. Cutting tool according to Claim 2, **characterized in that** the cutting inserts (2, 2') are arranged such that the active cutting corners (4, 5) of the first cutting insert (2) are connected by a straight cutting edge (6), wherein the side having the angled cutting edge (8) is located towards the rear in the drilling direction, and that, in the case of the second cutting insert (2'), the side having the angled cutting edge (8') is located at the front in the drilling direction.

4. Cutting tool according to Claim 3, **characterized in that** each active cutting corner (4, 5) of the first cutting insert (2) and the active cutting corner (3') of the second cutting insert (2') consist in each case of a circular-arc-shaped cutting-edge portion (13, 14, 12'), wherein each cutting-edge portion (13, 14, 12') has a different radius compared with one another.

5. Cutting tool according to Claim 3, **characterized in that** each active cutting corner (3', 4, 5) consists of three circular-arc-shaped cutting-edge portions (12', 15', 16'; 13, 17, 18; 14, 19, 20), wherein in each case the radii of the two lateral cutting-edge portions (15', 16'; 17, 18; 19, 20) of the same active cutting corner are the same size and have a different size compared with the lateral cutting-edge portions of the in each case other active cutting corners, and wherein the cutting-edge portions (12', 13, 14) located in each case in the middle have a radius which is larger by at least a factor of 5 than the adjacent lateral cutting-edge portions (15', 16'; 17, 18; 19, 20).

## Revendications

1. Outil de coupe destiné au forage et au tournage, comprenant un corps d'outil (1) en forme de fût et incluant un axe d'outil A, ainsi que deux plaquettes de coupe (2, 2') agencées radialement sur le corps d'outil (1) et décalées l'une par rapport à l'autre, chacune desdites plaquettes étant dotée de trois coins de coupe dont l'un au moins est un coin de coupe actif formé par deux segments d'arêtes contigus, caractérisé :
- premièrement, en ce que les plaquettes de coupe (2, 2') ont une forme identique et sont disposées de sorte telle que sur la première plaquette (2) deux coins de coupe (4, 5) aux positions axiales et radiales différentes assurent l'opération de coupe, tandis que les segments d'arêtes (9, 11) constituant le coin de coupe actif (5) positionné plus en arrière dans le sens du forage, forment avec une parallèle P à l'axe d'outil A, respectivement un angle α₁ compris entre 90 degrés et 96 degrés pour ce qui est du segment d'arête (9), et un angle α₂ compris entre 40 degrés et 55 degrés pour ce qui est du segment d'arête (11),
- deuxièmement, en ce que sur la seconde plaquette de coupe (2') un coin (3') assure la coupe, tandis que le segment d'arête (10') adjacent audit coin (3') et disposé plus en avant dans le sens du forage, forme avec une parallèle P' à l'axe d'outil A, un angle α₃ compris entre 90 degrés et 96 degrés et,
- et troisièmement, en ce que le coin de coupe actif (3') de la seconde plaquette (2') est agencé, dans le sens axial, entre les deux coins de coupe actifs (4, 5) de la première plaquette (2).

2. Outil de coupe selon la revendication 1, **caractérisé en ce que** les plaquettes de coupe (2, 2') ont la forme fondamentale d'un triangle équilatéral, chacune desdites plaquettes présentant, sur deux côtés, des arêtes de coupe droites (6, 7, 6', 7') et, sur le troisième côté, une arête (8, 8') formée par deux segments droits à biais concave (9, 10, 9', 10').

3. Outil de coupe selon la revendication 2, **caractérisé en ce que** les plaquettes de coupe (2, 2') sont agencées de sorte telle que les coins de coupe actifs (4, 5) de la première plaquette (2) sont reliés entre eux par une arête droite (6), le côté qui présente l'arête à biais (8) étant disposé en arrière dans le sens du forage, et **en ce que**, sur la seconde plaquette de coupe (2'), le côté qui présente l'arête à biais (8') est disposé en avant dans le sens du forage.

4. Outil de coupe selon la revendication 3, **caractérisé en ce que** les coins de coupe actifs (4, 5) de la première plaquette de coupe (2) ainsi que le coin de coupe actif (3') de la seconde plaquette (2') sont constitués, chacun, d'un segment circulaire (13, 14, 12') ayant chacun un rayon différent des autres.

5. Outil de coupe selon la revendication 3, **caractérisé en ce que** chacun des coins de coupe actifs (3', 4, 5) est constitué de trois segments circulaires (12', 15'; 16', 17, 18; 19, 20), les rayons des deux segments circulaires latéraux (15', 16'; 17, 18; 19, 20) d'un même coin de coupe actif étant, dans chaque cas, à la fois identiques entre eux et différents des segments circulaires latéraux de l'autre coin de coupe actif respectif, tandis que les segments circulaires centraux (12', 13, 14) présentent un rayon au moins cinq fois plus grand que celui des segments latéraux (15', 16'; 17, 18; 19, 20) adjacents.
